# EUROPEAN PATENT APPLICATION

(11) **EP 3 825 984 A2**
(43) Date of publication of application: **26.05.2021**
(21) Application number: 21164877.9
(22) Date of filing: 25.03.2021
(51) Int. Cl.: G09B 1/00

(54) **METHOD, APPARATUS, DEVICE, STORAGE MEDIUM AND PROGRAM FOR AUTONOMOUS PARKING**

(30) Priority: 30.06.2020 CN 202010623723
(71) Applicant: BEIJING BAIDU NETCOM SCIENCE AND TECHNOLOGY CO. LTD., 100085 Beijing (CN)
(72) Inventor: ZHANG, Teng, Beijing, 100085 (CN)
(74) Representative: V.O.

(57) **Abstract**

Methods, apparatuses, device, and storage media for autonomous parking are disclosed. The present disclosure relates to the field of autonomous parking. A method of autonomous parking according to the present disclosure includes determining a recommended driving route for autonomous parking; determining a position of a vehicle in the recommended driving route; determining whether the position of the vehicle is in a first road environment; and in response to determining that the vehicle is in the first road environment, determining a driving trajectory point of the vehicle in the first road environment based on the acquired image information of the first road environment and according to a pre-trained driving model. According to the solution of the present disclosure, it is possible to unbind the driving route from the specific parking area, not only to reduce the time and resource cost of re-learning and training, but also to be simple, convenient and easy to mass-produce.

## Description

### TECHNICAL FIELD

Embodiments of the present disclosure relate generally to intelligent driving technology, and more particularly, to a method, apparatus, electronic device, computer-readable storage medium and program for autonomous parking.

### BACKGROUND

In the field of autonomous parking, since specific road conditions vary widely, the corresponding parking operation varies. It is desirable in the art to make the autonomous parking route adaptable to more practical scenarios, rather than relying on a single road condition.

### SUMMARY

The present disclosure provides a method, apparatus, electronic device, and computer readable storage medium for autonomous parking.

According to one aspect of the present disclosure, a method of autonomous parking is provided. The method includes determining a recommended driving route for autonomous parking; determining a position of a vehicle in the recommended driving route; determining whether the position of the vehicle is in a first road environment; and in response to determining that the vehicle is in the first road environment, determining a driving trajectory point of the vehicle in the first road environment based on the acquired image information of the first road environment and according to a pre-trained driving model.

According to another aspect of the present disclosure, an apparatus for autonomous parking is provided. The apparatus includes a recommended driving route determination module configured to determine a recommended driving route for autonomous parking; a position determination module configured to determine a position of a vehicle in the recommended driving route; a first road environment determination module configured to determine whether the position of the vehicle is in a first road environment; and a driving trajectory point determining module configured to, in response to determining that the vehicle is in the first road environment, determine a driving trajectory point of the vehicle in the first road environment according to a pre-trained model based on the acquired image information of the first road environment.

According to another aspect of the present disclosure, an electronic device is provided, including at least one processor, and a storage device, communicated with the at least one processor; where, the storage device stores an instruction executable by the at least one processor, and the instruction is executed by the at least one processor, to enable the at least one processor to execute the method according to any one of embodiments of the present disclosure.

According to another aspect of the present disclosure, there is provided a non-transitory computer-readable storage medium storing computer instructions, where the computer instructions when executed cause the computer to execute the method according to any one of embodiments of the present disclosure.

According to another aspect of the present disclosure, there is provided a computer program, and the computer program, when executed by a computer, causes the computer to perform the method according to any one of embodiments of the present disclosure.

The present disclosure solves the problem that the parking route is highly associated with a specific parking area in the field of autonomous parking, and improves the generalization degree of the parking route by disassociating the parking route with the parking area.

It is to be understood that the description in this section is not intended to identify key or critical features of the embodiments of the disclosure, nor does it intend to limit the scope of the disclosure. Other features of the present disclosure will become readily understood from the following description.

### BRIEF DESCRIPTION OF THE DRAWINGS

The drawings intend to provide a better understanding of the present disclosure and are not to be construed as limiting the application. Wherein:
FIG. 1 illustrates an illustrative diagram of an example environment in which various embodiments of the present disclosure can be implemented;
FIG. 2 illustrates a flow diagram of a method for autonomous parking according to some embodiments of the present disclosure;
FIG. 3 shows an illustrative diagram of a parking route suitable for use with an exemplary embodiment of the present disclosure;
FIG. 4 shows an illustrative view of the driving environment at the road environment T in the parking route of FIG. 3;
FIG. 5 illustratively illustrates a block diagram of an apparatus for autonomous parking according to an exemplary embodiment of the present disclosure; and
FIG. 6 illustrates a block diagram of a computing device capable of implementing various embodiments of the present disclosure.

### DETAILED DESCRIPTION OF EMBODIMENTS

Exemplary embodiments of the present disclosure are described below in connection with the accompanying drawings, in which various details of the embodiments of the present disclosure are included to facilitate understanding, and are to be considered as exemplary only. Accordingly, one of ordinary skill in the art will recognize that various changes and modifications may be made to the embodiments described herein without departing from the scope and spirit of the present disclosure. Also, for clarity and conciseness, descriptions of well-known functions and structures are omitted from the following description.

In conventional autonomous parking solutions, the parking routes are associated with a particular parking area. An autonomous parking route trained in one parking area is almost unusable in another parking area. If it is needed to determine the parking route of a vehicle in a certain parking area, it is necessary to perform the learning and training process in the parking area in advance so as to determine a parking route specific to the parking area. Thus, it is necessary to obtain a large number of parameters of the parking area in advance.

However, this solution not only wastes time and resources, but also is not efficient in use. On the one hand, if parking area information is not obtained and the learning is not trained in advance, the automatic parking will not be available in this parking area. On the other hand, even if the information of the parking area is acquired, if the usage rate of the parking area is low, the value of such parking area information is low, and a large amount of redundant information is generated over the time.

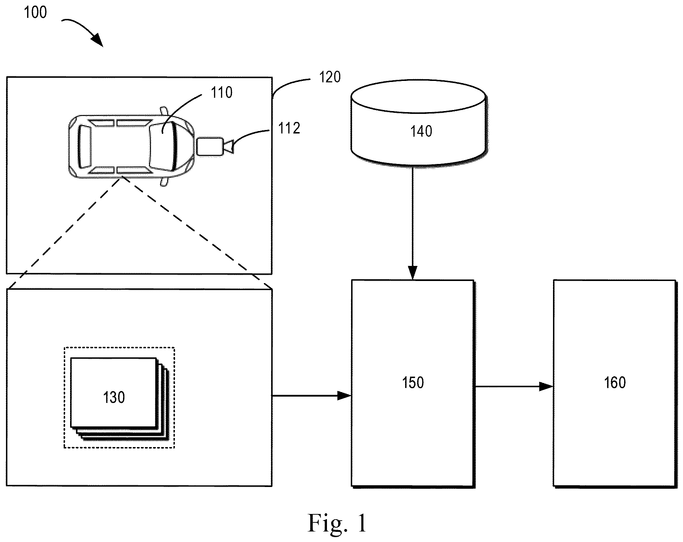

In view of the above problems, embodiments of the present disclosure provide a solution for autonomous parking. Embodiments of the present disclosure will be described in detail below in conjunction with Figs. 1-6.

FIG. 1 illustrates an illustrative diagram of an example environment 100 in which various embodiments of the present disclosure may be implemented. As shown in FIG. 1, in the environment 100, the vehicle 110 is driving on a target site 120, such as a parking area, which may be an outdoor parking area or an indoor parking area. In some embodiments, the vehicle 110 may be a vehicle 110 equipped with a certain autonomous parking capability, wherein the autonomous driving capability may include, but is not limited to, an auxiliary driving capability, a semi-autonomous driving capability, a high autonomous driving capability, or a full autonomous driving capability.

In the context of the present disclosure, the term autonomous parking may refer not only to the process of parking the vehicle in the appropriate parking position, but also to the cruising process before the parking. The vehicle 110 may acquire multiple real-time images of the surrounding environment by an image capture device 112 fixed or mounted thereon. The image capture device 112 includes at least one sensor. In some embodiments, the image capture device 112 may be a camera having one or more wide or ultra-wide angles capable of capturing scenes within 360 degrees of the surrounding environment.

The computing device 150 may be a remote server or a cloud that may be trained according to various data including the target route data 130 and the historical route data set 140, as well as a machine learning model. For example, the computing device 150 may project trajectory point data of a human driver's driving onto each captured image, input the image into a machine learning model, and then output a trajectory point projected on the image. In other words, what the computing device 150 learns is a mapping of an image of the environment to a particular driving trajectory point. It's understandable that the historical route data set 140 includes a plurality of route data that has been captured in a known plurality of scenes.

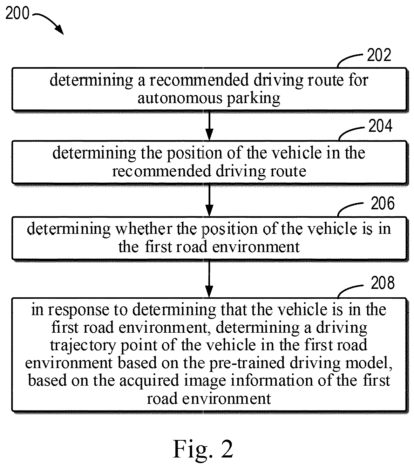

An example of a machine learning model may be a neural network model, such as a Convolutional Neural Network model (CNN), a Recurrent Neural Network (RNN), etc. The computing device 150 may perform the processes described herein with reference to Figs. 2-6 to make the mapping more accurate to obtain the final target route planning model 160.

FIG. 2 illustrates a flow diagram of a method 200 for autonomous parking according to some embodiments of the present disclosure. The method 200 may be performed by various types of computing devices.

At block 202, a recommended driving route for autonomous parking is determined. This recommended driving route is a relatively coarse route compared to the final driving trajectory point, which plans a sequence of approximate driving routes for autonomous parking. In some embodiments, the recommended driving route may be determined based on the start point and the end point of the vehicle and in accordance with the situation in the parking area. In some embodiments, a navigation module may be utilized to plan a route for the vehicle. These routes may be selected according to the preferences of the user, for example, a route with a shorter distance may be selected. In an alternative embodiment, the recommended driving route may also be planned based on a tendency to avoid congestion. In this way, it is possible to adapt the vehicle to different needs of individual users, which can effectively expand the scope of application of the solution of the present disclosure.

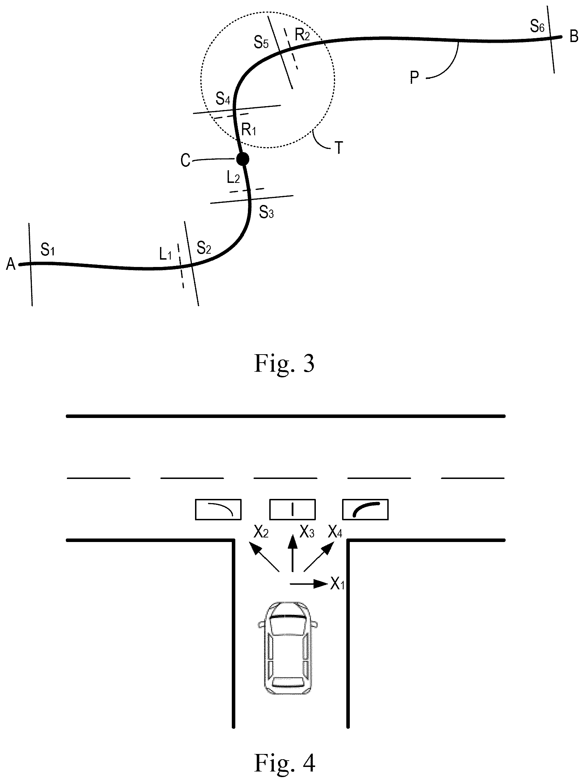

In some embodiments, the recommended driving route may comprise a sequence consisting of left turn, right turn, and/or go straight. For example, as shown in FIG. 3, a driving route P as shown in FIG. 3 is planned between the start point A and the end point B. In the illustrated scenario, this driving route P includes the following sequence: [straight line 1, left turn 1, straight line 2, right turn 1, and straight line 3]. As shown, straight line 1 represents the first straight-line route from point S1 to point S2. Similarly, straight line 2 represents a second straight line route from point S3 to point S4, and straight line 3 represents a third straight line route from point S5 to point S6. Similarly, it can be seen from the figure that the left turn 1 represents the route of the first left turn from the point L1 to the point L2, and the right turn 1 represents the route of the first right turn from the point R1 to the point R2. Through such a sequence, the vehicle can drive from the start point A to the end point B.

Referring back to FIG. 2, at block 204, the position of the vehicle in the recommended driving route is determined. Since the recommended driving route may be a sequence consisting of left turn, right turn and/or straight line, determining the position of the vehicle in the recommended driving route is to determine which segment of the sequence the vehicle shall follow to operate. In some embodiments, the position of the vehicle in the recommended driving route may be determined based on navigation information of the vehicle or simultaneous localization and mapping information. The navigation information may be acquired via the Global Positioning System (GPS), the BeiDou System (BDS), the GLONASS, or the Galileo. The Simultaneous Localization and Mapping (SLAM) enables the vehicle to perform self-positioning according to the position estimation and the map during the moving process, and meanwhile constructing an incremental map on the basis of the self-positioning, thereby realizing self-positioning and navigation of the vehicle. Referring to FIG. 3, for example, if the navigation information of the vehicle or the SLAM information determines that the vehicle is currently at point C in the recommended driving route, it can be determined that the vehicle needs three steps to reach the end point B, that is, [straight line 2, right turn 1, and straight line 3].

With continued reference to FIG. 2, in block 206, it is determined whether the position of the vehicle is in the first road environment. In some embodiments, the first road environment may include one or more road environments of an intersection, a T-shaped intersection, a bend, and a road endpoint. In this manner, the autonomous parking method according to embodiments of the present disclosure is applicable to various road environments. Thus, the method can be applied to various use scenarios.

It will be appreciated by those skilled in the art that any suitable manner may be employed to determine whether the position of the vehicle is in the first road environment. In some embodiments, an image capture device mounted on a vehicle may be utilized and an image processing module may be utilized to determine whether the vehicle is in the first road environment. The image capture device may be fixed at any desired position of the vehicle, and image information of the surrounding environment of the vehicle can be acquired. In some implementations, upon receipt of such image information, the image information is identified by an image processing module associated with the vehicle to determine whether the environment in which the vehicle is located is a first road environment. For example, the vehicle environment may be determined by comparing the image processing model with the pre-stored historical image information. In some implementations, for the scenario where signs are provided on both sides of the road, the signs may be captured by an image capture device mounted on the vehicle to determine that the vehicle is in the first road environment directly. The signs may be signposts indicating that the current road is an intersection or signposts indicating that the front is the end of the road. In other implementations, other manners may be used to determine the environment in which the vehicle is located. For example, it may be determined whether the vehicle is in the first road environment by using the indication information sent by the roadside device at the position where the vehicle is located.

Referring back to FIG. 2, at block 208, in response to determining that the vehicle is in the first road environment, a driving trajectory point of the vehicle in the first road environment is determined based on the pre-trained driving model and according to the acquired image information of the first road environment. This may be achieved by a deep learning convolutional network.

In some embodiments, the driving model may be trained based on historical images related to the first road environment and human driving routes related to the first road environment. Since the same type of road environment is taken as a set in the convolutional neural network model, the driving trajectory points within the set can be obtained by continuous learning of the model. For example, taking various road environments suitable for left turn as the same set, during pre-training, images of various specific road environments and specific driving trajectory points in which a person in the road environment turns left are inputted to a convolutional neural network model and are associated with each other. And then, by continuous supervising and learning, the convolutional neural network model may know which driving trajectory points should be used in a similar left turn road environment. Since the output result of the convolutional neural network model will become more accurate with the increase of the training samples, the more times the user uses, the more data the model can be trained, and the convolutional neural network model can be updated, thereby making the future driving trajectory point more accurate.

According to the embodiments of the present disclosure, various routes are divided into three driving status: go straight, left turn and right turn, and the model learns the route planning capability of the three driving status under different road conditions. Accordingly, it selects, based on the image information of the intersection, an appropriate left turn, right turn or straight route. Thus, the convolutional network is not learning a specific driving route. In this manner, it is possible to disassociate the driving route with the specific driving environment. Therefore, when a vehicle arrives in a parking area that has never been there, it is not necessary to train in the parking area in advance, thus it is possible to perform autonomous driving before parking by the method of the present disclosure without prior training in this parking area.

According to the technical solution of the embodiment of the present disclosure, the driving route is divided into a small driving environment in which the driving route determination needs to be performed and a straight driving environment in which the driving route determination does not need to be performed, so that the data training network does not need to be re-collected to reduce the time and resource cost, and the unbinding with a specific parking area can be realized, so that the generalization degree can be improved.

Referring to FIG. 4, there is shown an illustrative determination process of the vehicle at position T of FIG. 3. When the vehicle gets to the position T in the recommended driving route of FIG. 2, it is determined that the vehicle is currently in the first road environment at the intersection based on the image information captured by the camera on the vehicle. Here, the convolutional neural network model outputs four branches X1, X2, X3, and X4, where three branches X2, X3, and X4 output a route planning structure of a left turn, a straight line, and a right turn, respectively, and the other branch X1 outputs a vector having a length of 1, indicating whether the vehicle is currently in a first road environment that is an intersection. As can be seen in connection with the sequence of recommended driving routes in FIG. 3, the vehicle should perform a right turn operation at position T, rather than a left turn or go straight operation. The convolutional neural network model can finally determine that the specific driving trajectory point of the vehicle should be right turn at the position T according to the pre-trained driving model.

In some embodiments, the start point of the vehicle may be the position at which the vehicle enters the autonomous parking mode. As a result, as long as the vehicle is determined to enter the automatic parking mode, the position at which the vehicle is located at this time is set as the start point of the recommended running route. Thus, the degree of autonomy of the parking operation can be improved without additional manual input or determination. The endpoint of the recommended driving route may be a destination position suitable for vehicle parking. In an alternative embodiment, various schemes may be employed to determine the position at which the vehicle can be parked, the particular scheme being not limited by the embodiments of the present disclosure.

In some embodiments, the vehicle's driving trajectory point in the first road environment may include a left turn driving trajectory point, a right turn driving trajectory point, or a straight-line driving trajectory point. It will be appreciated that the left or right turn here includes turning actions of various radius of curvature. For example, when the road environment is an intersection where a turning is required, the left or right turn may be an action with a smaller radius of curvature. When the road environment is a bend such as a traffic ring island or a runway bend, the left turn or the right turn may be an action with a relatively larger radius of curvature.

In some embodiments, as shown in FIG. 3, there may be some overlap between two adjacent segments of routes. For example, there is a certain overlap between straight line 1 and left turn 1, i.e., a route between point L1 and point S2. There is a certain overlap between the left turn 1 and the straight line 2, i.e. the route between point S3 and point L2. There is a certain overlap between the straight line 2 and right turn 1, i.e. the route between point R1 and point S4. There is a certain overlap between the right turn 1 and the straight line 3, i.e. the route between point S5 and point R2. By providing overlapping portions between the respective segments, it is possible to avoid the route planning capability to be degraded due to a switch of the output branches. In this way, the route planning capability of the autonomous parking can be improved.

In some embodiments, in response to determining that the vehicle is in a second road environment, it may be determined that the driving trajectory point is a straight-line trajectory point. In some embodiments, the second road environment may include a straight road. That is, in the second road environment that does not belong to the first road environment, the vehicle uses a straight-line operation. Thus, the solution of the present disclosure divides a specific road environment into a first road environment in which a driving route determination is required and a second road environment in which a driving route determination is not required. In the first road environment, a specific driving trajectory is determined according to the image information of the road environment and the pre-trained model. In the second road environment, the vehicle only needs to keep going straight according to the current route.

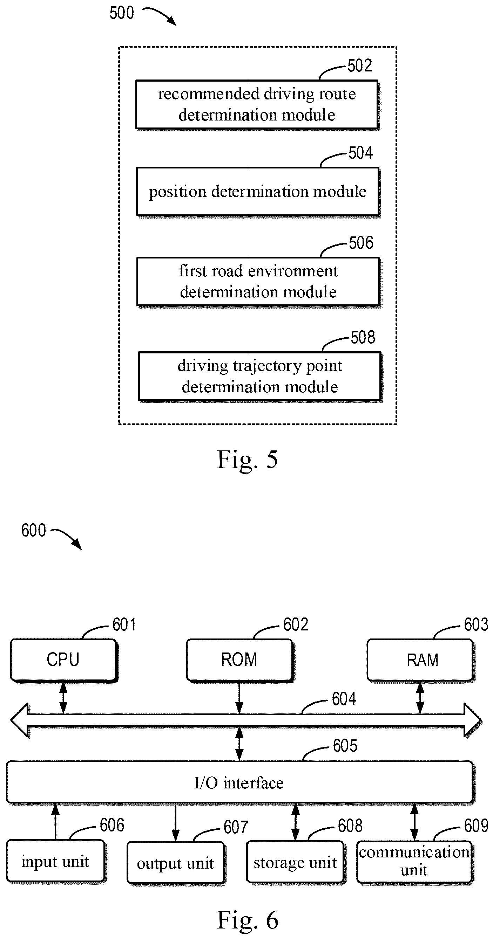

FIG. 5 illustratively illustrates a block diagram of an apparatus 500 for autonomous parking according to an exemplary embodiment of the present disclosure. Specifically, the apparatus 500 includes a recommended driving route determination module 502, a position determination module 504, a first road environment determination module 506, and a driving trajectory point determination module 508. The recommended driving route determination module 502 is configured to determine a recommended driving route for autonomous parking. The position determination module 504 is configured to determine a position of the vehicle in a recommended driving route. The first road environment determination module 506 is configured to determine whether a position of a vehicle is in a first road environment. The driving trajectory point determination module 508 is configured to, in response to determining that the vehicle is in the first road environment, determine a driving trajectory point of the vehicle in the first road environment based on the acquired image information of the first road environment and according to the pre-trained model.

In some embodiments, the first road environment determination module 506 includes an image information acquisition module configured to acquire image information of a surrounding environment of the vehicle. The first road environment determination module 506 is configured to determine whether the position of the vehicle is in the first road environment based on the image information.

In some embodiments, the position determination module 504 is configured to determine the position of the vehicle in the recommended driving route based on navigation information of the vehicle or simultaneous localization and mapping.

In some embodiments, the recommended driving route determination module 502 is configured to determine a recommended driving route for autonomous parking based on a start point and an end point of the vehicle.

In some embodiments, the start point of the vehicle is the position at which the vehicle enters the autonomous parking mode, and the end point is the position suitable for parking the vehicle.

In some embodiments, the driving model is trained based on historical images related to the first road environment and human driving routes related to the first road environment.

In some embodiments, the vehicle's driving trajectory points in the first road environment include a left turn driving trajectory point, a right turn driving trajectory point, or a straight-line driving trajectory point.

In some embodiments, the recommended driving route includes a sequence consisting of left turn, right turn, and/or go straight.

In some embodiments, the first road environment includes an intersection, a T-shaped intersection, a bend, and/or a road endpoint.

In some embodiments, the driving trajectory point determination module 508 is configured to determine the driving trajectory point as a straight line driving trajectory point in response to determining that the vehicle is in the second road environment.

In some embodiments, the second road environment includes a straight road.

According to an embodiment of the present disclosure, the present disclosure also provides an electronic device and a readable storage medium. FIG. 6 shows an illustrative block diagram of an electronic device 600 capable of implementing various embodiments of the present disclosure.

As shown, the electronic device 600 includes a Central Processing Unit (CPU) 601, which may perform various appropriate actions and processes according to computer program instructions stored in a Read-Only Memory (ROM) 602 or computer program instructions loaded into a Random Access Memory (RAM) 603 from a storage unit 608. In RAM 603, various programs and data needed for the operation of the electronic device 600 may also be stored therein. CPU 601, ROM 602, and RAM 603 are connected to each other via bus 604. An Input/Output (I/O) interface 605 is also connected to bus 604.

A plurality of components in the electronic device 600 are connected to the I/O interface 605, including an input unit 606, such as a keyboard, a mouse, and the like. An output unit 607, for example, various types of displays, speakers, and the like. A storage unit 608, such as a magnetic disk, an optical disk, or the like; A communication unit 609, such as a network card, a modem, or a wireless communication transceiver. The communication unit 609 allows the electronic device 600 to exchange information/data with other devices over a computer network such as the Internet and/or various telecommunications networks.

The various processes and processes described above, such as method 200, may be performed by processing unit 601. For example, in some embodiments, method 200 may be implemented as a computer software program tangibly embodied in a machine-readable medium, such as storage unit 608. In some embodiments, some or all of the computer program may be loaded and/or installed on the electronic device 600 via the ROM 602 and/or the communication unit 609. When the computer program is loaded into the RAM 603 and executed by the CPU 601, one or more actions of the method 200 described above may be performed.

The present disclosure may be a method, apparatus, system, and/or computer program product. The computer program product may include a computer readable storage medium having computer readable program instructions embodied thereon for performing various aspects of the present disclosure.

The computer-readable storage medium may be a tangible device that may hold and store instructions for use by the instruction execution device. The computer-readable storage medium may be, for example, but not limited to, an electrical storage device, a magnetic storage device, an optical storage device, an electromagnetic storage device, a semiconductor storage device, or any suitable combination of the foregoing. More specific examples (non-exhaustive lists) of the computer-readable storage medium include: A portable computer disk, a hard disk, a Random Access Memory (RAM), a Read-Only Memory (ROM), an Erasable Programmable Read-Only Memory (EPROM or flash memory), a Static Random Access Memory (SRAM), a portable Compact Disk Read-Only Memory (CD-ROM), a Digital Versatile Disk (DVD), a memory stick, a floppy disk, a mechanical encoding device, e.g., a punch card or in-groove bump structure on which instructions are stored, and any suitable combination of the foregoing. As used herein, a computer-readable storage medium is not to be construed as a transitory signal itself, such as a radio wave or other freely propagating electromagnetic wave, an electromagnetic wave propagating through a waveguide or other transmission medium (e.g., an optical pulse through a fiber optic cable), or an electrical signal transmitted through a wire.

The computer readable program instructions described herein may be downloaded from a computer readable storage medium to various computing/processing devices, or via a network, such as the Internet, a local area network, a wide area network, and/or a wireless network, to an external computer or external storage device. The network may include copper transmission cables, fiber optic transmission, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium in the respective computing/processing device.

The computer program instructions used to perform the operations of the present disclosure may be assembly instructions, Instruction Set Architecture (ISA) instructions, machine instructions, machine-related instructions, microcode, firmware instructions, state setting data, or source or object code written in any combination of one or more programming languages, including object-oriented programming languages such as Smalltalk, C + +, and the like, and conventional procedural programming languages such as C or the like; The computer readable program instructions may be executed entirely on the user computer, partly on the user computer, as a separate software package, partly on the user computer, partly on the remote computer, or entirely on the remote computer or server. In the case of a remote computer, the remote computer may be connected to the user computer through any kind of network, including a Local Area Network (LAN) or a Wide Area Network (WAN), or may be connected to an external computer (e.g., connected through the Internet using an Internet service provider). In some embodiments, various aspects of the present disclosure are implemented by personalizing electronic circuits, such as programmable logic circuits, Field Programmable Gate Arrays (FPGAs), or Programmable Logic Arrays (PLAs), with the status information of the computer-readable program instructions.

Various aspects of the present disclosure are described herein with reference to flow charts and/or block diagrams of methods, apparatus (systems), and computer program products in accordance with embodiments of the present disclosure. It should be understood that each block of the flowcharts and/or block diagrams, and combinations of blocks in the flowcharts and/or block diagrams, may be implemented by computer readable program instructions.

The computer readable program instructions may be provided to a processing unit of a general purpose computer, special purpose computer, or other programmable data processing apparatus to produce a machine such that the instructions, when executed by the processing unit of the computer or other programmable data processing apparatus, produce means for implementing the functions/acts specified in the flowchart and/or block diagram block or blocks. The computer-readable program instructions may also be stored in a computer-readable storage medium that cause a computer, programmable data processing apparatus, and/or other device to operate in a particular manner, such that the computer-readable medium having the instructions stored thereon includes an article of manufacture that includes instructions that implement various aspects of the functions/acts specified in the flowchart and/or block diagram block or blocks.

Computer readable program instructions may also be loaded onto a computer, other programmable data processing apparatus, or other device such that a series of operational steps are performed on the computer, other programmable data processing apparatus, or other device to produce a computer-implemented process such that the instructions that execute on the computer, other programmable data processing apparatus, or other device implement the functions/actions specified in one or more of the flowcharts and/or block diagrams.

The flowcharts and block diagrams in the drawings illustrate architectures, functions, and operations of possible implementations of systems, methods, and computer program products in accordance with various embodiments of the present disclosure. In this regard, each block in a flowchart or block diagram may represent a module, program segment, or portion of an instruction that contains one or more executable instructions for implementing a specified logical function. In some alternative implementations, the functions noted in the blocks may also occur in an order different from that noted in the drawings. For example, two successive blocks may actually be executed substantially in parallel, and they may sometimes be executed in the reverse order, depending on the functionality involved. It is also noted that each block of the block diagrams and/or flowcharts, and combinations of blocks in the block diagrams and/or flowcharts, may be implemented with a dedicated hardware-based system that performs the specified functions or actions, or may be implemented with a combination of dedicated hardware and computer instructions.

According to the technical solution of the embodiment of the present disclosure, a driving route is divided into a small driving environment in which a driving route determination is required and a straight driving environment in which a driving route determination is not required. When a vehicle arrives at a new parking area, only a stored driving sequence needs to be replaced without learning the parking route of the parking area again. Thereby a convenient and easy solution is realized and suitable for a mass production.

It is to be understood that the steps of reordering, adding or deleting may be performed using the various forms shown above. For example, the steps described in the present disclosure may be performed in parallel or sequentially or in a different order, so long as the desired results of the technical solution disclosed in the present disclosure can be achieved, and no limitation is imposed herein.

The foregoing detailed description is not intended to limit the scope of the present disclosure. It will be appreciated by those skilled in the art that various modifications, combinations, sub-combinations, and substitutions may be made depending on design requirements and other factors. Any modifications, equivalents, and modifications that fall within the spirit and principles of this application are intended to be included within the scope of this application.

## Claims

1. A method for autonomous parking, comprising:
determining (202) a recommended driving route for autonomous parking;
determining (204) a position of a vehicle in the recommended driving route;
determining (206) whether the position of the vehicle is in a first road environment; and
determining (208), in response to determining that the vehicle is in the first road environment, a driving trajectory point of the vehicle in the first road environment based on acquired image information of the first road environment and according to a pre-trained driving model.

2. The method of claim 1, wherein the driving model is trained based on historical images related to the first road environment and human driving routes related to the first road environment.

3. The method of claim 1 or 2, wherein the driving trajectory point of the vehicle in the first road environment comprises a left-turn driving trajectory point, a right-turn driving trajectory point, or a straight-line driving trajectory point.

4. The method of any one of preceding claims, wherein the recommended driving route comprises a sequence consisting of left turn, right turn and/or go straight.

5. The method of claim any one of preceding claims, wherein determining whether the position of the vehicle is in the first road environment comprises:
acquiring image information of surrounding environment of the vehicle; and
determining whether the position of the vehicle is in the first road environment based on the image information.

6. The method of any one of preceding claims, wherein the position of the vehicle in the recommended driving route is determined based on navigation information of the vehicle or simultaneous localization and mapping.

7. The method of any one of preceding claims, wherein the first road environment comprises: an intersection, a T-shaped intersection, a bend, and/or a road endpoint.

8. The method of any one of preceding claims, further comprising:
in response to determining that the vehicle is in a second road environment, determining that the driving trajectory point is a straight-line driving trajectory point.

9. The method of claim 8, wherein the second road environment comprises a straight road.

10. An apparatus for autonomous parking, comprising: modules for performing the method according to any one of claims 1 to 9.

11. An electronic device, comprising:
at least one processor; and
a memory in communication with the at least one processor; wherein,
the memory stores instructions executable by the at least one processor, when executed by the at least one processor, the instructions enable the at least one processor to perform the method of any one of claims 1 to 9.

12. A non-transitory computer-readable storage medium storing computer instructions, wherein the computer instructions are used for causing the computer to perform the method of any one of claims 1 to 9.

13. A computer program comprising instructions which, when the program is executed by a computer, cause the computer to perform the method according to any one of claims 1 to 9.
